# EUROPÄISCHE PATENTSCHRIFT

(11) **EP 0 802 314 B1**
(45) Veröffentlichungstag und Bekanntmachung des Hinweises auf die Patenterteilung: **18.09.2002**
(21) Anmeldenummer: 97105329.3
(22) Anmeldetag: 29.03.1997
(51) Int. Cl.: F02D 41/08, F02D 41/16

(54) **Verfahren zur lenkbetätigungsabhängigen Einstellung der Leerlaufdrehzahl einer Brennkraftmaschine in einem Kraftfahrzeug**
Method for adjusting the idling speed of an internal combustion engine, depending on steering action
Méthode d'ajustement du ralenti d'un moteur à combustion interne, en fonction du braquage

(30) Priorität: 20.04.1996 DE 19615752
(43) Veröffentlichungstag der Anmeldung: 22.10.1997
(73) Patentinhaber: Volkswagen Aktiengesellschaft, 38436 Wolfsburg (DE)
(72) Erfinder: Schmidt, Werner, 38542 Leiferde (DE)

(56) Entgegenhaltungen:
- EP-A- 0 281 152
- EP-A- 0 318 467
- US-A- 4 545 449
- US-A- 4 748 951
- PATENT ABSTRACTS OF JAPAN vol. 010, no. 273 (M-518), 17. September 1986 & JP 61 096146 A (MAZDA MOTOR CORP), 14. Mai 1986

## Beschreibung

Die Erfindung betrifft ein Verfahren zur Einstellung der Leerlaufdrehzahl gemäß dem Oberbegriff des Patentanspruches 1.

Es ist bekannt, daß das Zuschalten von Nebenaggregaten, wie etwa Klimakompressoren oder das Betätigen einer servounterstützten Lenkung, eine Brennkraftmaschine stark belasten kann. Insbesondere bei Leerlaufdrehzahl der Brennkraftmaschine führt das Zuschalten eines solchen zusätzlichen Verbrauchers zu einem Einbruch dieser Drehzahl. Es ist allgemeiner Stand der Technik, zur Stabilisierung des Leerlaufes der Brennkraftmaschine beim Zuschalten solcher Verbraucher in irgendeiner Weise die Leerlaufdrehzahl zu erhöhen.

Problematisch in der Praxis ist besonders der Fall, in dem ein mit einer servounterstützten Lenkung ausgerüstetes Kraftfahrzeug mit Leerlaufdrehzahl betrieben wird und gleichzeitig die Lenkung betätigt wird, wie es beispielsweise beim Ein- oder Ausparken vorkommen kann. In bestimmten Situationen kann es vorkommen, daß das Ausparken bei maximal eingeschlagener Lenkung und Leerlaufdrehzahl plötzlich unterbrochen werden muß, wobei das Lenkrad von der angreifenden, manuellen Betätigungskraft entlastet wird. Das Lenkrad dreht dabei selbsttätig geringfügig zurück und die Servopumpe für die Lenkung wird entlastet.
Bekannte Vorrichtungen erhöhen in Abhängigkeit vom eingeschlagenen Lenkwinkel die Leerlaufdrehzahl, so daß ein stabiler Leerlauf erreicht wird und die Brennkraftmaschine nicht abstirbt. Zur Vermeidung von unnötigen Emissionen und Kraftstoffverbräuchen senken diese bekannten Vorrichtungen die Leerlaufdrehzahl nach dem vorbeschriebenen Lösen des Lenkrades sofort wieder auf einen vorher eingestellten Wert ab. Kann dann der Ausparkvorgang fortgesetzt werden, wird häufig das Lenkrad sehr rasch aus der gelösten, aber fast maximal eingeschlagenen Position bis an den Vollanschlag gedreht. Hierdurch steigt der Druck im Servorsystem schlagartig an, wodurch die dann hochbelastete Servopumpe die Brennkraftmaschine zum Stillstand bringen kann.

In US-PS 4,545,449 wird vorgeschlagen, in einem weiten Lenkwinkelbereich, welcher von der neutralen Mittellage bis in die Nähe des maximalen Einschlages reicht, die die Leistung der Brennkraftmaschine regelnde Drosselklappe in Abhängigkeit des Druckes im Servosystem der Lenkung linear ansteigend auszulenken. In der Nähe des maximalen Lenkausschlages wird bis zu seinem Erreichen anstelle des Servodruckes der Lenkwinkel der Lenksäule als Eingangsgröße für eine Schaltungsanordnung verwendet, die die Drosselklappe weiter öffnet. In beiden Lenkwinkelbereichen wird die Drosselklappe mit Hilfe einer pneumatischen Druckdose verstellt. Deren eine Kammer wird dabei vom im Ansaugssystem herrschenden Unterdruck beaufschlagt.
Die vorbeschriebene Anordnung hat sich in der Praxis als nicht ausreichend schnell herausgestellt, da sich durch die Anordnung der unterdruckführenden Leitungen, der notwendigen Ventile und der Druckdose eine derartige zeitliche Verzögerung im Ansprechverhalten der Brennkraftmaschine ergibt, daß die hierfür notwendige Zeit deutlich größer ist als die Zeit für die Lastabforderung durch das rasche Drehen am Lenkrad im Servosystem.

Der Erfindung liegt die Aufgabe zu Grunde, ein Verfahren bereit zustellen, mit dessen Hilfe das Absterben einer Brennkrafmaschine im Leerlaufbetrieb bei Betätigung einer servounterstützen Lenkung verhindert wird.

Die Lösung dieser Aufgabe gelingt mit den Merkmalen des Patentanspruches 1.

Die Erfindung sieht vor, die Leerlaufdrehzahl der Brennkraftmaschine ab Erreichen eines bestimmten Verdrehwinkels des Lenkrades von einem ersten niedrigeren Wert auf einen zweiten höheren Wert zu erhöhen. Dieser Erhöhung wird beibehalten, unabhängig davon ob oberhalb dieses Lenkwinkels das Lenkrad weiter ausgelenkt wird, etwa bis zum maximal Anschlag, oder nicht. Der zweite Wert der Leerlaufdrehzahl ist dabei so gewählt, daß die Brennkraftmaschine bei maximalen Lenkeinschlag einen stabilen Leerlauf aufweist.

Das Erreichen des bestimmten Verdrehwinkels wird von einer die Betätigung der Lenkung erkennenden Einrichtung signalisiert, was auf vielfältige Art und Weise realisierbar ist. Unmittelbar kann der aktuelle Lenkwinkel, z. B. mittels eines Drucksensors in der hydraulischen Servolenkung erkannt werden.
Anschließend kann mit diesem erhöhten Wert der Leerlaufdrehzahl das Kraftfahrzeug rangiert werden, beispielsweise für einen Ein- oder Ausparkvorgang. Währenddessen bleibt der erhöhte Wert der Leerlaufdrehzahl erhalten, auch wenn zwischenzeitlich das Lenkrad in die Nähe seiner Mittellage zurückgedreht wird und auf Leerlauf erkannt wird. Würde hierbei bereits wieder auf den ersten, niedrigeren Wert zurückgesetzt werden, könnte das eingangs erwähnte Problem des Absterbens der Brennkraftmaschine auftreten. Erfindungsgemäß ist daher weiterhin vorgesehen, daß das Rücksetzen des Leerlaufdrehzahlwertes nur dann erfolgt, wenn die erste Einrichtung keinen Leerlauf erkennt und die zweite Einrichtung einen Wert unterhalb eines vorgebbaren Schwellwertes erkennt und eine dritte Einrichtung einen Wert oberhalb einer vorgebbaren Fahrgeschwindigkeit des Kraftfahrzeuges erkennt. Dieser Wert kann beispielsweise auf 20 km/h voreingestellt sein und signalisiert somit, daß der Rangiervorgang beendet ist und sich das Kraftfahrzeug im normalen Fahrbetrieb befindet.

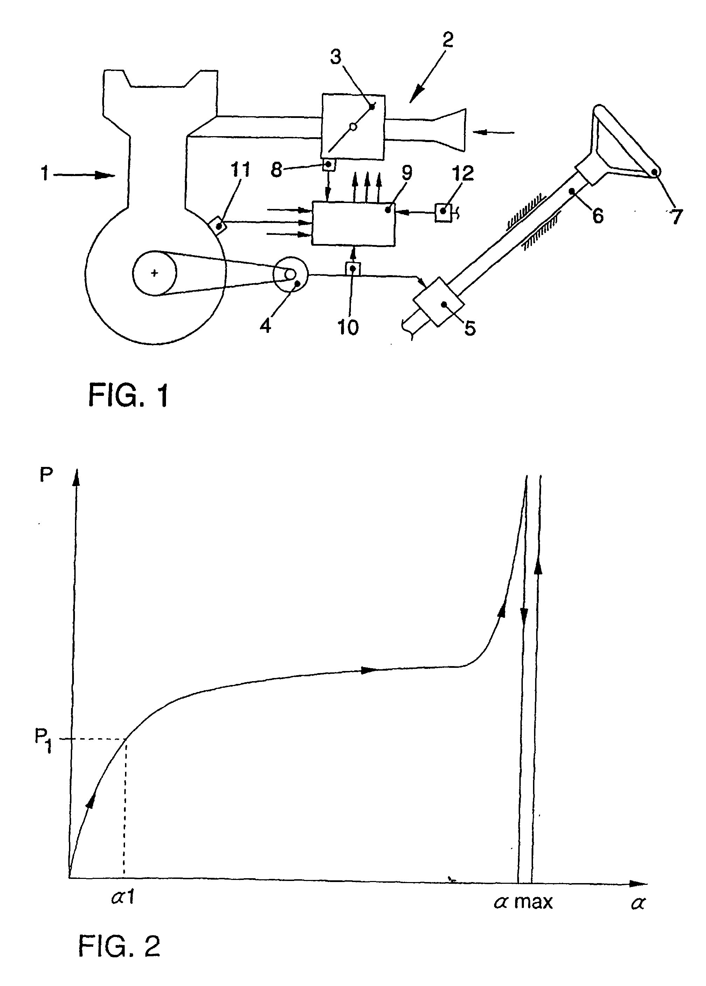

Weitere Vorteile der Erfindung ergeben sich aus dem nachfolgend näher beschriebenen Ausführungsbeispiel der Erfindung, welches anhand einer Zeichnung erläutert wird. Dabei zeigt Figur 1 eine schematisierte Systemübersicht und Figur 2 den Verlauf des Pumpendruckes einer Servopumpe über dem Lenkwinkel.

Ein nicht näher gezeigtes Kraftfahrzeug weist eine insgesamt mit 1 bezeichnete Brennkraftmaschine mit einem Lufteinlaßsystem 2 auf. Hierhin ist zur Regelung der Brennkraftmaschinenleistung eine Drosselklappe 3 angeordnet.

Die Brennkraftmaschine 1 treibt eine Servopumpe 4 an, welche hydraulischen Druck zu einem Lenkgetriebe 5 liefert. Dieses wird vom einem an einer Lenksäule 6 gehaltenen Lenkrad 7 betätigt.

An einem Drosselklappengehäuse ist als eine erste Einrichtung ein Leerlaufstellungsschalter 8 zur Erkennung des Leerlaufbetriebes der Brennkraftmaschine 1 angeordnet, der diesen Zustand der Brennkraftmaschine 1 an eine elektronische Steuerung 9 des Kraftfahrzeuges weiterleitet.

Die Betätigung der Lenkung wird über eine zweite Einrichtung in Form eines Drucksensors 10 in einer zwischen Servopumpe 4 und Lenkgetriebe 5 angeordneten Druckleitung erkannt..

Der Steuerung 9 wird des weiteren der Wert einer Brennkraftmaschinendrehzahl n über einen Drehzahlsensor 11 zugeführt und eine dritte Einrichtung in Form eines Fahrgeschwindigkeitssensors 12 erkennt die aktuelle Fahrgeschwindigkeit. Dieser Fahrgeschwindigkeitssensor 12 kann z. B. an einem Rad des Kraftfahrzeuges angeordnet sein.

Figur 2 repräsentiert einen typischen Verlauf des Servopumpendruckes P über dem Lenkwinkel α. Ausgehend von einer neutralen Mittelstellung des Lenkrades 7 bei α=0 steigt der Druck P mit zunehmenden Werten von α bis in die Nähe des maximalen Lenkeinschlages bei α ₘₐₓ an, wobei es bei Erreichen von α ₘₐₓ zu einer deutlichen Überhöhung des Druckes P kommen kann. Der Kurvenverlauf ist dabei von der zeitlichen Änderung des Drehwinkels am Lenkrad 7 abhängig.

Wird das Fahrzeug bei Leerlaufdrehzahl rangiert, z. B. bei einem Ausparkvorgang, so wird hierbei α ₘₐₓ erreicht. Kann das Ausparken, beispielsweise auf Grund eines sich nähernden, weiteren Fahrzeuges nicht fortgesetzt werden, wird die Kraftfahrzeugbremse betätigt und das Lenkrad 7 schlagartig freigegeben, wodurch der Pumpendruck P sehr rasch auf den Wert 0 absinkt. Dabei dreht das Lenkrad 7 geringfügig zurück, wobei auch der Lenkwinkel α geringfügig niedrigere Werte annehmen kann, was jedoch zur besseren Übersichtlichkeit in Figur 2 nicht dargestellt ist.

Kann der Ausparkvorgang fortgeführt werden, erhöht sich durch ruckartiges drehen am Lenkrad bis zum Anschlag der Druck P in sehr kurzer Zeit erneut.

Erfindungsgemäß wird zu einem bestimmten, einen Lenkwinkel α₁ repräsentierenden Wert P₁ des Servodruckes P, z. B. 40 bar, mittels der Steuerung 9 die Leerlaufdrehzahl n von ihrem ersten auf einen höheren, zweiten Wert gesetzt. Bei Lenkwinkeln α oberhalb von α₁ bleibt dieser erhöhte Leerlaufdrehzahlwert erhalten, unabhängig davon, in welcher Weise das Lenkrad 7 anschließend bewegt wird.
Die Leerlaufdrehzahl n wird also immer dann erhöht, wenn mittels Leerlaufstellungsschalter 8 Leerlauf erkannt wird und mittels Drucksensor 10 das Erreichen des Wertes von P₁ signalisiert wird.

Die Leerlaufdrehzahl n kann in hier nicht erläuterter, bekannter Art und Weise erhöht werden, beispielsweise mittels eines Leerlauffüllungsreglers.

Das Rücksetzen der Leerlaufdrehzahl auf den ersten Wert erfolgt erst dann, wenn der Leerlaufstellungsschalter 8 geöffnet wird und der Drucksensor 10 einen Wert unterhalb eines im Steuergerät 9 abgelegten Schwellwertes, z. B. 40 bar, erkennt und der Fahrgeschwindigkeitssensor 12 eine Fahrgeschwindigkeit oberhalb eines ebenfalls im Steuergerät 9 abgelegten und fahrzeugspezifisch einstellbaren Wertes, z. B. 20 km/h, erkennt.

Hierdurch ist zuverlässig verhindert, daß während eines Rangiervorganges des Kraftfahrzeuges, z. B. durch den Abfall des Servodruckes durch Lösen des Lenkrades 7 oder durch langsames Fahren, die Leerlaufdrehzahl auf den ersten Wert abfällt. Andererseits wird durch diese Verknüpfungen sichergestellt, daß die Leerlaufdrehzahl einen niedrigen, kraftstoffsparenden Wert annimmt, wenn der Rangiervorgang beendet ist und das Fahrzeug beispielsweise bei einem Stopp vor einer Lichtzeichenanlage oder im Stop and Go im Leerlauf betrieben werden muß.

Ergänzend sei darauf hingewiesen, daß die der Brennkraftmaschine 1 zugeordnete Steuerung 9 noch weitere Signale dieser Brennkraftmaschine 1 bzw. anderer Komponenten des Kraftfahrzeuges verarbeitet und damit korrespondierende Steuerungs- oder Regegelungsfunktionen wahrnimmt. So kann die Leerlaufdrehzahl beispielsweise auch in Folge des Zuschaltens eines Klimakompressors oder nach einem Kaltstart erhöht werden. Daher kann die Leerlaufdrehzahl vor Erreichen des Winkels α₁ bereits ausreichend hoch sein, solche Fälle werden hier jedoch auf Grund einer vereinfachten Darstellung des erfindungsgemäßen Verfahrens nicht berücksichtigt.

Wird das Kraftfahrzeug mit vollem Lenkeinschlag für eine bestimmte Zeitspanne, nach deren Ablauf die Kriterien für einen Kaltstart noch nicht erfüllt sind abgestellt, kann im Steuergerät 9 ein Zeitzähler integriert sein, welcher beispielsweise für eine voreinstellbare Zeitspanne von 60 Minuten nach dem Abstellen einer betriebswarmen Brennkraftmaschine bei einem Neustart die Leerlaufdrehzahl auf den erhöhten Wert setzt.

## Patentansprüche

1. Verfahren zur lenkbetätigungsabhängigen Einstellung der Leerlaufdrehzahl einer Brennkraftmaschine (1) in einem Kraftfahrzeug, mit einer ersten Einrichtung (8) zur Erkennung eines Leerlaufbetriebes der Brennkraftmaschine, mit einer zweiten Einrichtung (10) zur Erkennung einer Betätigung einer servounterstützten Lenkung des Kraftfahrzeuges **dadurch gekennzeichnet, daß** eine dritte Einrichtung (12) zur Erkennung einer Fahrgeschwindigkeit vorhanden ist,
wobei die Brennkraftmaschine (1)
mit einem ersten Wert der Leerlaufdrehzahl betrieben wird, wenn die erste Einrichtung (8) Leerlauf erkennt und die zweite Einrichtung (10) keine Betätigung oder eine Betätigung bis zu einem einen bestimmten Lenkwinkel repräsentierenden Wert erkennt,
und die Brennkraftmaschine (1) mit einem zweiten, erhöhten Wert der Leerlaufdrehzahl betrieben wird, wenn die erste Einrichtung (8) Leerlauf erkennt und die zweite Einrichtung (10) Werte oberhalb des bestimmten Lenkwinkels erkennt, wobei diese erhöhte Leerlaufdrehzahl beibehalten wird, unabhängig von Veränderungen des Lenkwinkels oberhalb des einen bestimmten Lenkwinkels,
und die Brennkraftmaschine (1) dann wieder mit dem ersten Wert der Leerlaufdrehzahl betrieben wird, wenn
- die erste Einrichtung (8) keinen Leerlauf erkennt und
- die zweite Einrichtung (10) einen Wert unterhalb eines Schwellwertes erkennt und
- die dritte Einrichtung (12) einen Wert oberhalb einer vorgebbaren Fahrgeschwindigkeit erkennt.

2. Verfahren nach Anspruch 1, **dadurch gekennzeichnet, daß** die zweite Einrichtung als Drucksensor (10) ausgebildet ist.

3. Verfahren nach Anspruch 2, **dadurch gekennzeichnet, daß** der Drucksensor (10) zwischen einer Servopumpe (4) und einem Lenkgetriebe (5) in einer Druckreitung angeordnet ist.

4. Verfahren nach Anspruch 1, **dadurch gekennzeichnet, daß** der Schwellwert zwischen 30 bar und 50 bar, vorzugsweise etwa 40 bar, beträgt.

5. Verfahren nach Anspruch 1, **dadurch gekennzeichnet, daß** die vorgebbare Fahrgeschwindigkeit zwischen 10 km/h und 30 km/h, vorzugsweise etwa 20 km/h beträgt.

## Claims

1. Method for setting, as a function of actuation by the steering, the idling speed of an internal combustion engine (1) in a motor vehicle, having a first device (8) for detecting an idling operation of the internal combustion engine and having a second device (10) for detecting actuation of a servo-assisted steering of the motor vehicle, **characterized in that** there is a third device (12) for detecting a driving speed, the internal combustion engine (1) being operated at a first value of the idling speed if the first device (8) detects idling and the second device (10) does not detect actuation or detects actuation up to a value representing a certain steering angle, and the internal combustion engine (1) being operated at a second, increased value of the idling speed if the first device (8) detects idling and the second device (10) detects values above the given steering angle, this increased idling speed being maintained irrespective of changes to the steering angle above the given steering angle, and the internal combustion engine (1) then being operated again at the first value of the idling speed if
- the first device (8) does not detect any idling, and
- the second device (10) detects a value below a threshold value, and
- the third device (12) detects a value above a specifiable driving speed.

2. Method according to Claim 1, **characterized in that** the second device is designed as a pressure sensor (10).

3. Method according to Claim 2, **characterized in that** the pressure sensor (10) is arranged in a pressure pipe between a servo pump (4) and a steering mechanism (5).

4. Method according to Claim 1, **characterized in that** the threshold value is between 30 bar and 50 bar, and is preferably approximately 40 bar.

5. Method according to Claim 1, **characterized in that** the specifiable driving speed is between 10 km/h and 30 km/h, and is preferably approximately 20 km/h.

## Revendications

1. Méthode d'ajustement du ralenti d'un moteur à combustion interne (1) en fonction du braquage, dans un véhicule automobile, avec un premier dispositif (8) de détection d'un fonctionnement au ralenti du moteur à combustion interne, avec un deuxième dispositif (10) de détection d'un actionnement d'une direction assistée du véhicule automobile, **caractérisée en ce qu'**il est prévu un troisième dispositif (12) de détection d'une vitesse d'avance, le moteur à combustion interne (1) étant actionné avec une première valeur de la vitesse de ralenti lorsque le premier dispositif (8) détecte un ralenti, et le deuxième dispositif (10) détecte un actionnement ou un actionnement jusqu'à une valeur représentant un angle de braquage déterminé, et le moteur à combustion interne (1) étant actionné avec une deuxième valeur accrue de la vitesse de ralenti, lorsque le premier dispositif (8) détecte un ralenti et que le deuxième dispositif (10) détecte des valeurs au-dessus de l'angle de braquage déterminé, cette vitesse de ralenti accrue étant maintenue indépendamment de variations de l'angle de braquage au-dessus d'un angle de braquage déterminé,
et le moteur à combustion interne (1) étant alors à nouveau actionné avec la première valeur de la vitesse de ralenti lorsque
- le premier dispositif (8) ne détecte aucun ralenti et
- le deuxième dispositif (10) détecte une valeur en dessous d'une valeur seuil et
- le troisième dispositif (12) détecte une valeur au-dessus d'une vitesse d'avance prédéfinissable.

2. Méthode selon la revendication 1, **caractérisée en ce que** le deuxième dispositif est réalisé en tant que capteur de pression (10).

3. Méthode selon la revendication 2, **caractérisée en ce que** le capteur de pression (10) est disposé entre une pompe pour la conduite assistée (4) et un mécanisme de direction (5) dans une conduite sous pression.

4. Méthode selon la revendication 1, **caractérisée en ce que** la valeur seuil est comprise entre 30 bars et 50 bars, de préférence vaut environ 40 bars.

5. Méthode selon la revendication 1, **caractérisée en ce que** la vitesse d'avance prédéfinissable est comprise entre 10 km/h et 30 km/h, de préférence vaut environ 20 km/h.
